(19)

Europäisches Patentamt

European Patent Office

Office européen des brevets

(11) **EP 4 571 254 A1**

(12) **EUROPEAN PATENT APPLICATION**

(43) Date of publication:
**18.06.2025 Bulletin 2025/25**

(21) Application number: **23216573.8**

(22) Date of filing: **14.12.2023**

(51) International Patent Classification (IPC):
**G01C 21/16** $^{(2006.01)}$ **B60W 40/10** $^{(2012.01)}$

(52) Cooperative Patent Classification (CPC):
**G01C 21/16; B60W 40/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Valeo Comfort and Driving Assistance 94000 Créteil (FR)**

(72) Inventor: **RADWAN, Mohamed 94000 Créteil (FR)**

(74) Representative: **Delplanque, Arnaud Valeo Comfort and Driving Assistance 6 rue Daniel Costantini 94000 Créteil (FR)**

(54) **METHOD FOR THE LOCALIZATION OF A MOVING VEHICLE**

(57)    The disclosure notably relates to computer-implemented method for localization of a moving vehicle. The method comprises, at a time period in which the moving vehicle moves above a predetermined speed, obtaining vehicle motion data stemming from four vehicle wheel sensors, and/or a IMU sensor, and/or a Steering sensor. The method also comprises computing a wheelbase parameter and a track width parameter of the moving vehicle from the vehicle motion data. After the time period, the method also comprises using the computed wheelbase parameter and the track width parameter for computing the position and orientation of the moving vehicle. The method also comprises computing a wheelbase parameter of trailer if attached to the vehicle from the vehicle and trailer motion data.

FIG. 2

EP 4 571 254 A1

**Description**

**TECHNICAL FIELD**

The disclosure relates to the field of computer programs and systems, and more specifically to a method, system and program for the localization of a moving vehicle.

**BACKGROUND**

Dead Reckoning refers to any set of techniques for localizing the position of a moving vehicle including areas not covered by Global Navigation Satellite Systems (GNSS). Dead Reckoning relies on available motion signals coming from different motion sensors to determine the position of the vehicle at all times. However, existing solutions may be subject to errors when only relying on motion signals, for example when driving for a long distance and/or for a long time in an uncovered area such as a tunnel or wide underground parking areas.

Within this context, there is still a need for an improved method for the localization of a moving vehicle.

**SUMMARY**

It is therefore provided a computer-implemented method for the localization of a moving vehicle. The method comprises, at a time period in which the moving vehicle moves above a predetermined speed, obtaining vehicle motion data. The vehicle motion data stems from four vehicle wheel sensors. Additionally or alternatively, the vehicle motion data stems from a IMU sensor. Additionally or alternatively, the vehicle motion data stems from a steering sensor. The method also comprises, at the time period, computing a wheelbase parameter and a track width parameter of the moving vehicle from the vehicle wheel motion data. The method also comprises, after the time period, using the computed wheelbase parameter and the track width parameter for computing the position and orientation of the moving vehicle.

The method may comprise one or more of the following:

- the vehicle motion data comprises a speed of the moving vehicle at a rear right side $v_{RR}$, a speed of the moving vehicle at a rear left side $v_{RL}$, a speed of the moving vehicle at a frontal right side $v_{FR}$, a speed of the moving vehicle at a frontal left side $v_{FL}$, a front wheel angle at the center of front axle $\varphi_F$ and a rear wheel angle at the center of rear axle $\varphi_R$ and a yaw rate $\dot{\theta}$, wherein

  • computing the wheelbase parameter based on the equation:

$$\ell = \left( \frac{(v_{RR}+v_{RL})\cos(\varphi_R)+(v_{FR}+v_{FL})\cos(\varphi_F)}{4} \right) \left( \frac{\tan(\varphi_F)-\tan(\varphi_R)}{\dot{\theta}} \right);$$

  and
  • computing the track width parameter based on the equation:

$$w = \frac{v_{RR}\cos(\varphi_R)+v_{FR}\cos(\varphi_F)-v_{RL}\cos(\varphi_R)-v_{FL}\cos(\varphi_F)}{2\dot{\theta}};$$

- the vehicle motion data also comprises displacements $\Delta S_{FL}$, $\Delta S_{RL}$, $\Delta S_{FR}$, $\Delta S_{RR}$, wheel angles $\varphi_{FR}$, $\varphi_{FL}$, $\varphi_{RR}$, $\varphi_{RL}$, wheel orientation changes $\Delta\theta_{FR}$, $\Delta\theta_{FL}$, $\Delta\theta_{RR}$, $\Delta\theta_{RL}$, and computing the position of the moving vehicle (2000) comprises:

  • computing a net displacement $\Delta S$ based on the equation:

$$\Delta S = \frac{(\Delta S_{FL}\cos(\varphi_{FL})+\Delta S_{RL}\cos(\varphi_{RL}))\times TL+(\Delta S_{FR}\cos(\varphi_{FR})+\Delta S_{RR}\cos(\varphi_{RR}))\times TR}{4\times\cos(\varphi_R)},$$

  where:

$$TL = 1 + \frac{w}{2\ell}(\tan(\varphi_{FL}) - \tan(\varphi_{RL})),$$

and

$$TR = 1 - \frac{w}{2\ell}(\tan(\varphi_{FR}) - \tan(\varphi_{RR}));$$

- computing a net speed at the center of the rear axle $v$ based on the equation:

$$v = \frac{(v_{FL}\cos(\varphi_{FL}) + v_{RL}\cos(\varphi_{RL})) \times TL + (v_{FR}\cos(\varphi_{FR}) + v_{RR}\cos(\varphi_{RR})) \times TR}{4 \times \cos(\varphi_R)};$$

- computing a net orientation change of the ego vehicle $\Delta\theta$ based on the equation:

$$\Delta\theta = \frac{\Delta\theta_{FL} + \Delta\theta_{RL} + \Delta\theta_{FR} + \Delta\theta_{RR}}{4},$$

and
- computing the position $[x_n, y_n]$ and orientation $\theta_n$ of the moving vehicle with respect to a known position $[x_0, y_0]$ and known orientation $\theta_0$ based on the equation:

$$\theta_n = \theta_0 + \frac{\Delta\theta}{2},$$

$$if\ (\varphi_F \approx \varphi_R),$$
$$x_n = x_0 + \Delta S \times \cos(\theta_n + \varphi_R)$$
$$y_n = y_0 + \Delta S \times \sin(\theta_n + \varphi_R)$$
$$else$$
$$x_n = x_0 + \Delta S \times \cos(\theta_n)$$
$$y_n = y_0 + \Delta S \times \sin(\theta_n)$$
$$end$$
$$\theta_n = \theta_n + \frac{\Delta\theta}{2};$$

- wherein the vehicle (2000) is a four wheeled vehicle or a vehicle having attached a trailer, and wherein:

  - when the vehicle is a four wheeled vehicle, the vehicle motion data comprises data stemming from four respective vehicle wheel sensors, the vehicle motion data comprising front wheel angles at the center of front axle; and
  - when the vehicle has attached a trailer, the vehicle motion data comprises data stemming from two rear vehicle wheel sensors of the vehicle and two wheel vehicle sensors of the trailer, the vehicle motion data comprising a hitch angle being the difference between the orientation angle of the vehicle and the orientation angle of the trailer;

- the vehicle motion data stems from an odometer;
- the odometer is a 4-wheel odometer.

It is further provided a program comprising instructions which, when executed by a computer system, cause the system to perform the method.

It is further provided a system comprising a processor coupled to a memory, the memory having recorded thereon the computer program of claim.

The system may be coupled with or further comprise a 4-wheel odometer, a steering system and/or an IMU.

It is further a vehicle equipped with the system.

## BRIEF DESCRIPTION OF THE DRAWINGS

Non-limiting examples will now be described in reference to the accompanying drawings, where:

- FIG. 1 shows an example of the system;
- FIG. 2 shows illustrate the method.

## DETAILED DESCRIPTION

It is proposed a computer-implemented method for the localization of a moving vehicle. The method comprises, at a time period in which the moving vehicle moves above a predetermined speed, obtaining vehicle motion data. The vehicle motion data stems from four vehicle wheel sensors. Additionally or alternatively, the vehicle motion data stems from a IMU sensor. Additionally or alternatively, the vehicle motion data stems from a steering sensor. The method also comprises, at the time period, computing a wheelbase parameter and a track width parameter of the moving vehicle from the vehicle wheel motion data. The method also comprises, after the time period, using the computed wheelbase parameter and the track width parameter for computing the position and orientation of the moving vehicle.

Such a method improves the localization of the moving vehicle. Notably, as the method obtains the vehicle motion data from the four vehicle wheel sensors and/or the IMU sensor and/or the steering sensor, the method obtains accurately the position and orientation of the moving vehicle relative to the four wheels of the vehicle when the vehicle moves above the predetermined speed, that is at/during said time period. Indeed, since the vehicle moves above the predetermined speed, the obtained vehicle motion data is more accurately obtained, as the four vehicle wheel sensors and/or the IMU sensor and/or the steering sensor are more prone to acquisition noise and measurement errors/inaccuracies when the vehicle moves at low speeds and less prone to these noise and errors/inaccuracies at high speed. In other words, the method uses the sensor data to compute the wheelbase parameter and trackwidth parameter when these data is accurately measured, that is when the vehicle moves at a speed larger than the predetermined speed. Once calculated, these parameters can be used for subsequent time periods for determining the vehicle positioning, regardless of the speed of the vehicle, as they have been computed once and for all at a speed that allows accuracy on the computation (but this does not exclude performing again/updating the computation at a subsequent time period of high speed). Consequently, the wheelbase parameter and the trackwidth parameter reliably measure the wheelbase and the trackwidth of the vehicle as it moves in the real world, and thus the method obtains an accurate estimation of the speed of the vehicle relative to the four wheels, as the wheelbase parameter and the trackwidth parameter determine the longitudinal and lateral spacing distances between the four vehicle wheel sensors. This improves the accuracy of the position of the moving vehicle, for example when modeled as a single moving point, and allows to compute the actual vehicle angle for each wheel, which yield the net position and orientation of the moving vehicle in a highly accurate manner.

The method is computer-implemented. This means that steps (or substantially all the steps) of the method are executed by at least one computer, or any system alike, for example any computer or any system mounted on a vehicle. Thus, steps of the method are performed by the computer, possibly fully automatically, or, semiautomatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose, e.g., a system configured to be mounted on a vehicle. The system may comprise a processor coupled to a memory, the memory having recorded thereon a computer program comprising instructions for performing the method. The memory is any hardware adapted for such storage, possibly comprising several physical distinct parts (e.g. one for the program). The system may also comprise a communication interface configured for obtaining the vehicle motion data from the four vehicle wheel sensor, and/or the IMU sensor and/or the steering sensor. The system may be configured to be mounted to the moving vehicle, for example being affixed to the vehicle or alternatively being configured to be removed from the vehicle.

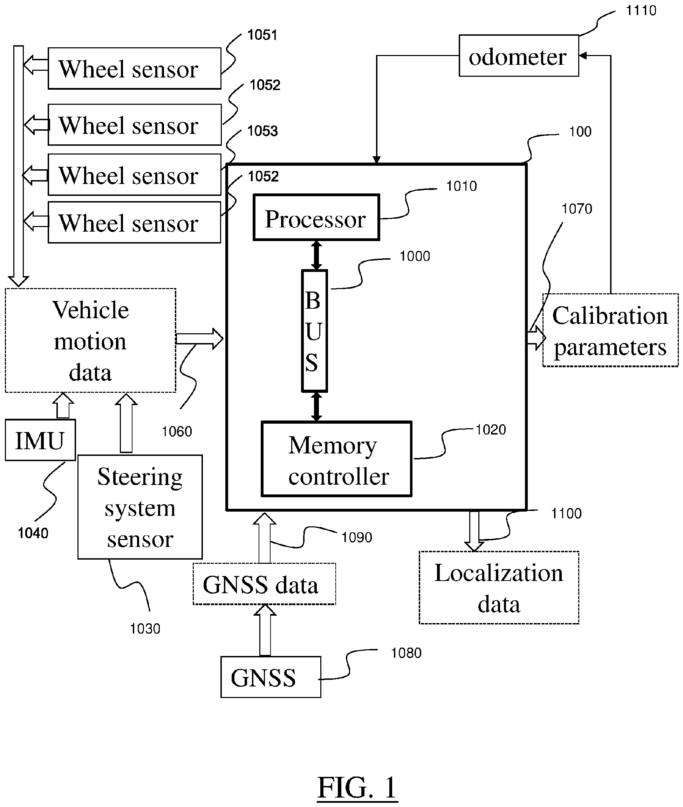

FIG. 1 shows an example of the system, wherein the system is a computer system configured to be mounted on the vehicle.

The computer 100 of the example comprises a processor or processing unit such as a central processing unit (CPU) 1010 connected to an internal communication BUS 1000. A random access memory (RAM) may be optionally connected to the BUS (not shown). A memory controller 1020 manages accesses to a mass memory device, such as hard drive or other form of non-volatile memory such as EPROM, EEPROM, and flash memory devices. Any of the foregoing may be supplemented by, or incorporated in, specially designed ASICs (application-specific integrated circuits). The computer may optionally also include a display, e.g., a touch screen (not shown). The display may be configured for displaying the localization of the vehicle. The computer 100 may be coupled with a GNSS 1080 through a port or interface 1090 and with the vehicle wheel sensors 1051-1054 like a wheel encoder, an IMU sensor 1040 and a steering sensor 1030 through a port or interface 1060. The computer 100 may comprise an output port 1070 for sending calibration parameters to the odometer 1110. The computer 100 may also comprise an output port 1100 for outputting the data forming the vehicle's predicted localization. The odometer 1110 may be coupled with the computer 100 as shown in the figure to send its predictions to the computer. The data may comprise the localization of the moving vehicle, that is the position and orientation of the moving vehicle discussed herein. The display may also be configured for displaying the localization of the vehicle.

It is further provided a vehicle equipped with the system. The vehicle may be a four-wheeled vehicle. Additionally or alternatively, the vehicle may have attached a trailer.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

The method is for determining the localization of a moving vehicle. In other words, the method is for obtaining a position and orientation of the moving vehicle in the real world.

The time period may be any time (expressed, e.g., in seconds, or minutes) in which the moving vehicle moves in the real world. The time period may be of any predetermined duration, e.g., 1 second or more. The method may determine a start of the time period upon detecting that the vehicle moves above the predetermined speed. The predetermined speed may be set in any manner, for example above 30km/h or more, e.g., 50 km/h or more. The method may determine that the vehicle is moving (e.g., as a continuous displacement) above the predetermined speed (*e.g.* by determining that the speed of the moving vehicle is larger than this predetermined speed, *e.g.* for a minimal time frame, *e.g.* of at least a few seconds), *e.g.* and/or on a location and time frame where the sensor data is available (*e.g.* when there is dead reckoning). Upon determining that the vehicle is moving above the predetermined speed, the method may determine the start of the time period. The method may determine the end of the time period by detecting that the speed of the moving vehicle becomes lower than the predetermined speed. During the time period, the method may obtain the motion data once and compute the wheelbase parameter and trackwidth parameter once. Alternatively, during the time period, the method may obtain motion data samples repeatedly and in real time (*e.g.* at regular time steps) and upon each obtention of a motion data sample, computing the wheelbase parameter and trackwidth parameter. The wheelbase parameter and trackwidth parameter outputted by the method at the end of the time period may in this case be an average of the wheelbase parameter and trackwidth parameter values computed for the different motion data samples. Alternatively, the method may determine the start and the end of the predetermined period at predetermined time intervals, and the method may determine if the vehicle moves above the predetermined speed for example by determining an average speed on each predetermined time interval, *i.e.* for each predetermined time interval it is determined whether the vehicle speed is high enough to perform the obtention of the motion data and the computation of the parameters. There may be a single time period, *i.e.* once a time period where the vehicle speed is larger than the predetermined speed is available and the computation of the parameters has been performed during this time period, the parameters are set once and for all and used for computing the vehicle's position after the time period, regardless of the vehicle's speed. Alternatively, there may be several time periods, for example each time period where the vehicle speed is larger than the predetermined speed may used to compute/recompute (*i.e.* update) the wheelbase parameter and trackwidth parameter.

At (during) the time period, the method obtains vehicle motion data stemming from four vehicle sensors. By "vehicle motion data", it is meant any collection of values (*e.g.*; a time-ordered sequence of values) indicative of the vehicle's motion during the time period, for example values indicating a position, speed, yaw and/or steering of the vehicle during the time period. By "stemming" it is meant that the values obtained from the vehicle motion data are the result of respective measurements obtained by the four vehicle sensors, and/or the IMU sensor and/or the steering sensor (for example obtained concomitantly by the four vehicle sensors, the IMU sensor and the steering sensor) when the vehicle undergoes motion. Each of the four vehicle sensors may obtained measurements on a respective portion of the vehicle.

For example a first vehicle sensor may obtain measurements (e.g., the speed of the moving vehicle) on a rear right side of the moving vehicle, a second vehicle sensor may obtain measurements on a rear left side of the moving vehicle, a third vehicle sensor may obtain measurements on a frontal right side of the moving vehicle and a fourth vehicle sensor may obtain measurements on a frontal left side of the moving vehicle. The IMU sensor may obtain a yaw rate $\dot{\theta}$. The steering sensor may obtain a front wheel angle at the center of front axle $\varphi_F$ and a rear wheel angle at the center of rear axle $\varphi_R$. Obtaining the vehicle motion data may comprise performing computations or conversions from the (e.g. "raw") data incoming from the four vehicle sensors. Obtaining the vehicle motion data comprise acquiring the raw data incoming from the four vehicle sensors, performing computations on at least part (e.g., all of) the raw data and transmitting the data (after conversion) to the system, as known in the art.

The vehicle motion data may stem from an odometer. The odometer may be any instrument used for measuring the distance traveled by a vehicle.

The odometer may be a 4-wheel odometer. For example, the odometer may be for example the odometer disclosed in the patent DE102018116284A1.

The method computes the wheelbase parameter and the track width parameter of the moving vehicle from the vehicle wheel motion data. The track width is the distance between the centers of two rear wheels of the moving vehicle. The wheelbase parameter is the horizontal distance between respective centers of front and rear wheels of the moving vehicle. In other words, the wheelbase parameter and the track width parameter are obtained from functions (e.g., equations) on the vehicle motion data.

After the time period (that is, after the time period elapses), the method uses the computed wheelbase parameter and the track width parameter for computing (for example repeatedly and in real-time, *e.g.* at regular time intervals during motion of the vehicle) the position and orientation of the moving vehicle. This is performed regardless of the value of the vehicle speed, *i.e.* at high speed and at low speed. The method may for that compute the longitudinal and lateral spacing distances between the four vehicle wheel sensors based on the computed wheelbase parameter and the track width parameter. The method may also compute respective wheel angles for each wheel based on the longitudinal and lateral spacing distances. The method may also compute a net displacement and speed at a reference point based on the measured driven distance and speed for every wheel. The method may also compute a change in orientation for each wheel. Thereby, the method obtains the position and orientation of the vehicle with respect to the position and displacements of the respective four vehicle wheel sensors. The method may compare the obtained position and orientation of the moving vehicle after the time period with respect to the position and orientation of the moving vehicle at the time period (known beforehand) e.g., at an instant of the time period or an average on the time period. The method may update the localization of the moving vehicle based on the position and orientation known beforehand. The method may track the movement of the moving vehicle according to the updated localization of the moving vehicle, e.g., shown as a path on a map.

This improves the determination of the localization of the moving vehicle. Indeed, the method leverages from the available vehicle motion data stemming from the four vehicle wheel sensors, and/or the IMU sensor, and/or the steering sensor for determining the position and the orientation of the moving vehicle (after the time period has elapsed) as a change in the net displacement, speed and change in orientation on displacements, positions and orientation changes on each of the wheels of the moving vehicle associated to the four wheel vehicle sensors. Thus, the localization (that is, the position and orientation of the moving vehicle) is more precise, for example compared to localizing the moving vehicle as a single point in space. Moreover, the improved accuracy is specifically useful for localizing the moving vehicle when driving a long distance and/or for a long time on areas having no global navigation satellite system (GNSS) coverage, for example inside long tunnels or on wide underground areas such as parking areas.

The vehicle motion data may comprise a speed of the moving vehicle at a rear right side $v_{RR}$, for example stemming from a first vehicle wheel sensor. The vehicle motion data may also comprise a speed of the moving vehicle at a rear left side $v_{RL}$, for example stemming from a second vehicle wheel sensor. The vehicle motion data may also comprise a speed of the moving vehicle at a frontal right side $v_{FR}$, for example stemming from a third vehicle wheel sensor. The vehicle motion data may also comprise a speed of the moving vehicle at a frontal left side $v_{FL}$, for example stemming from a four vehicle wheel sensor. The vehicle motion data may also comprise a front wheel angle at the center of front axle $\varphi_F$. The vehicle motion data may also comprise a rear wheel angle at the center of rear axle $\varphi_R$ and a yaw rate $\dot{\theta}$. The front wheel angle at the center of front axle $\varphi_F$ and the rear wheel angle at the center of rear axle $\varphi_R$ may stem from the steering sensor. The yaw rate may stem from the IMU sensor.

Computing the wheelbase parameter may be based on (for example, by computing numerically after the time period) the equation (also denoted "eq. 1" below):

$$\ell = \left(\frac{(v_{RR} + v_{RL})\cos(\varphi_R) + (v_{FR} + v_{FL})\cos(\varphi_F)}{4}\right)\left(\frac{\tan(\varphi_F) - \tan(\varphi_R)}{\dot{\theta}}\right) \quad (eq.\,1)$$

$\ell$ denotes the wheelbase parameter. Equation eq. 1 is a closed-form equation that takes as input the speed of the moving vehicle at the rear right side $v_{RR}$, the speed of the moving vehicle at the rear left side $v_{RL}$, the speed of the moving vehicle at the frontal right side $v_{FR}$, the speed of the moving vehicle at the frontal left side $v_{FL}$, the rear wheel angle at the center of rear axle $\varphi_R$, the front wheel angle at the center of front axle $\varphi_F$ and the yaw rate $\dot{\theta}$.

Computing the track width parameter may be based on (for example, by computing numerically after the time period) the equation (also denoted as "eq. 2"below):

$$w = \frac{v_{RR}\ \cos(\varphi_R) + v_{FR}\ \cos(\varphi_F) - v_{RL}\ \cos(\varphi_R) - v_{FL}\ \cos(\varphi_F)}{2\ \dot{\theta}} \quad (eq.\,2)$$

Equation eq. 2 estimates the track width taking as input the speed of the moving vehicle at the rear right side $v_{RR}$, the speed of the moving vehicle at the rear left side $v_{RL}$, the speed of the moving vehicle at the frontal right side $v_{FR}$, the speed of the moving vehicle at the frontal left side $v_{FL}$, the rear wheel angle at the center of rear axle $\varphi_R$, the front wheel angle at the center of front axle $\varphi_F$ and the yaw rate $\dot{\theta}$.

The equation eq. 1 and the equation eq. 2 result in obtaining an accurate estimation for the wheelbase and the track width, respectively. The equations are highly accurate in several scenarios when determining the position and orientation of the moving vehicle (based on the computed wheelbase parameter and the track width parameter). For example, the method maintains a high accuracy when the moving vehicle is subject to steering maneuvers of high amplitude at the time period in which the moving vehicle moves above the predetermined speed, for example where the yaw rate has significantly large values (for example greater than 10 °/s or more). After the time period, the output wheelbase parameter equation and the track width parameter equation may be used at different driving scenarios, for example lower steering maneuvers where the yaw rate from the IMU sensor may be subject to noise.

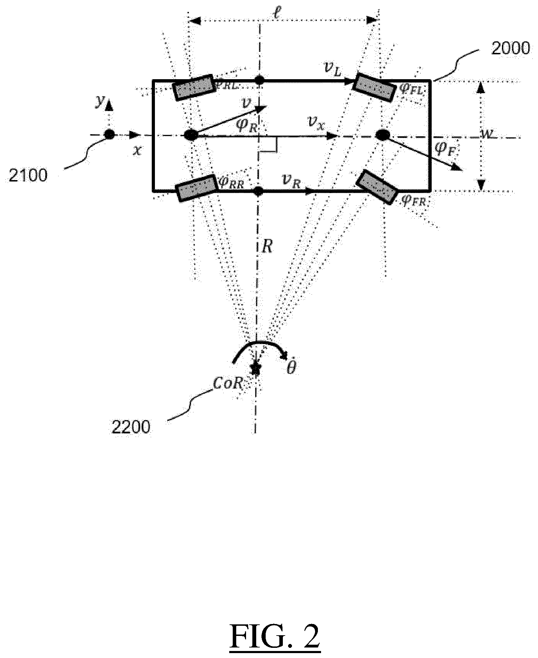

It is now discussed, with reference to FIG. 2, examples of the derivation of equation eq. 1 and equation eq. 2.

FIG. 2 illustrates the motion of a moving vehicle 2000 over a reference frame 2100. The movement of the vehicle may define a center of rotation *CoR* 2200.

Derivation of equation eq. 1.

Equation eq. 1 may be derived from the radius of rotation R 2200. The radius of rotation R of the moving vehicle vehicle may be defined as the perpendicular distance from the center of rotation *CoR* to a longitudinal axis of the moving vehicle. The radius of notation R may also be equivalently denoted as the as the ratio between a longitudinal velocity of the moving vehicle $v_x$ and the yaw rate $\dot{\theta}$. The radius of rotation R may also equivalently defined as the ratio between the wheelbase and the difference between the tangents of the front and rear wheel angles defined at the centers of the front and rear axles, respectively, under the hypothesis that that any angle has positive sign in the counterclockwise direction and negative in the clockwise direction, and that wheel angles are measured from the longitudinal axis of the moving vehicle to a respective wheel direction. It is to be noted that the input front and rear wheel angles are for a virtual centered wheel angle; thus, when a wheel steer to the left it has a positive wheel angle, and when steer to the right it has a negative wheel angle.

This yields the following equalities for the radius of rotation R:

$$\frac{v_x}{\dot{\theta}} = R = \frac{\ell}{\tan(\varphi_F) - \tan(\varphi_R)}.$$

The leftmost equation corresponds the definition of R as the ratio between the longitudinal velocity of the moving vehicle $v_x$ and the yaw rate $\dot{\theta}$. The rightmost equation corresponds to the definition of R as the ratio between the wheelbase and the difference between the tangents of the front and rear wheel angles defined at the centers of the front and rear axles.

Algebraic manipulations yield the following equation for the wheelbase parameter -e.

$$\ell = v_x \left( \frac{\tan(\varphi_F) - \tan(\varphi_R)}{\dot{\theta}} \right).$$

The longitudinal velocity of the moving vehicle $v_x$ may be approximated to the net of the projections of the speeds of each of the four wheels in a longitudinal x-axis direction of the moving vehicle, that is, the speed of the moving vehicle at the rear right side $v_{RR}$, the speed of the moving vehicle at the rear left side $v_{RL}$, the speed of the moving vehicle at the frontal right side $v_{FR}$ and the speed of the moving vehicle at the frontal left side $v_{FL}$. The front wheels may be approximated to both have the direction of the virtual center front wheel angle ($\varphi_F$), and the two rear wheels are approximated to both have the direction of the virtual center rear wheel angle ($\varphi_R$).

This yields the following equation for the longitudinal velocity of the moving vehicle $v_x$:

$$v_x = \frac{(v_{RR} + v_{RL})\cos(\varphi_R) + (v_{FR} + v_{FL})\cos(\varphi_F)}{4}.$$

An algebraic substitution on the equation for $\ell$ above readily yields equation eq. 1.

Derivation of equation eq. 2.

Equation eq. 2 may be obtained from the difference between the speed projections at the right and left sides $v_R$ and $v_L$ of the moving vehicle.

The projected speeds $v_R$ and $v_L$ may be defined as follows:

$$v_R = \frac{v_{RR}\ \cos(\varphi_R) + v_{FR}\ \cos(\varphi_F)}{2}$$

$$v_L = \frac{v_{RL}\ \cos(\varphi_R) + v_{FL}\ \cos(\varphi_F)}{2}$$

The difference between two projected speeds $v_R$ and $v_L$ may be equivalent to the yaw rate $\dot{\theta}$ multiplied by a track width w of the moving vehicle. This yields the following equation for w:

$$w = \frac{v_R - v_L}{\dot{\theta}}.$$

Substituting algebraically the equations for $v_R$ and $v_L$ into the above equation for w yields equation eq. 2.

The vehicle motion data may also comprise displacements $\Delta S_{FL}$ (also denoted as frontal left displacement), $\Delta S_{RL}$ (also denoted as rear left displacement), $\Delta S_{FR}$ (also called frontal right displacement), $\Delta S_{RR}$ (also denoted as rear right displacement). The vehicle motion data may also comprise wheel angles $\varphi_{FR}$ (also denoted as frontal right angle), $\varphi_{FL}$ (also denoted as frontal left angle), $\varphi_{RR}$ (also denoted as rear right angle), $\varphi_{RL}$ (also denoted as rear left angle). The vehicle motion data may also comprise wheel orientation changes $\Delta\theta_{FR}$ (also denoted as frontal right wheel orientation change), $\Delta\theta_{FL}$ (also denoted as frontal left wheel orientation change), $\Delta\theta_{RR}$ (also denoted as rear right wheel orientation change), $\Delta\theta_{RL}$ (also denoted as rear left wheel orientation change).

Computing the position of the moving vehicle (after the time period) may comprise computing a net displacement $\Delta S$ based on (for example, by computing numerically after the time period) the equation (also denoted as "eq. 3"):

$$\Delta S = \frac{(\Delta S_{FL}\cos(\varphi_{FL}) + \Delta S_{RL}\cos(\varphi_{RL})) \times TL + (\Delta S_{FR}\cos(\varphi_{FR}) + \Delta S_{RR}\cos(\varphi_{RR})) \times TR}{4 \times \cos(\varphi_R)} \qquad (eq.\,3)$$

where:

$$TL = 1 + \frac{w}{2\,\ell}(\tan(\varphi_{FL}) - \tan(\varphi_{RL})),$$

and

$$TR = 1 - \frac{w}{2\,\ell}(\tan(\varphi_{FR}) - \tan(\varphi_{RR})).$$

Computing the position of the moving vehicle may also comprise computing a net speed at the center of the rear axle $v$ based (for example, by computing numerically after the time period) on the equation:

$$v = \frac{(v_{FL}\cos(\varphi_{FL}) + v_{RL}\cos(\varphi_{RL})) \times TL + (v_{FR}\cos(\varphi_{FR}) + v_{RR}\cos(\varphi_{RR})) \times TR}{4 \times \cos(\varphi_R)} \qquad (eq.4)$$

Computing the position of the moving vehicle may also comprise computing a net orientation change of the moving vehicle $\Delta\theta$ based on (for example, by computing numerically after the time period) the equation:

$$\Delta\theta = \frac{\Delta\theta_{FL} + \Delta\theta_{RL} + \Delta\theta_{FR} + \Delta\theta_{RR}}{4} \qquad (eq.5)$$

Computing the position of the moving vehicle may also comprise computing the position in coordinates $[x_n, y_n]$ and orientation $\theta_n$ of the moving vehicle with respect to a known position in coordinates $[x_0, y_0]$ and known orientation $\theta_0$ based on the equation:
Computing the position of the moving vehicle may also comprise computing a position and orientation at the center of the rear axle after the predetermined period given the position and orientation known at the time period. The position and orientation after the predetermined period may be denoted as a triple $\{x_n, y_n, \theta_n\}$ where $x_n$ and $y_n$ are x, y coordinates on a reference frame and $\theta_n$ is the orientation of the vehicle on the reference frame. The orientation known at the time period may be denoted as $\{x_0, y_0, \theta_0\}$. The computation may be based on (for example, by computing numerically after the time period) the equation:

$$\theta_n = \theta_0 + \frac{\Delta\theta}{2}$$

$$if\ (\varphi_F \approx \varphi_R)$$

$$x_n = x_0 + \Delta S \times \cos(\theta_n + \varphi_R)$$

$$y_n = y_0 + \Delta S \times \sin(\theta_n + \varphi_R)$$

$$else \qquad\qquad (eq.6)$$

$$x_n = x_0 + \Delta S \times \cos(\theta_n)$$

$$y_n = y_0 + \Delta S \times \sin(\theta_n)$$

$$end$$

$$\theta_n = \theta_n + \frac{\Delta\theta}{2}\ .$$

This results in an accurate determination of the position and orientation of the moving vehicle after the time period. Indeed, as the method computes the net displacement, net speed and net orientation change based on vehicle motion data from the four wheel sensors, the IMU sensor and the steering sensor, the method is more accurate for determining the position and the orientation of the moving vehicle as the moving vehicle is represented as a moving object instead of a single moving point. Indeed, the method essentially projects the components of the four wheels of the vehicle (for example in a reference plane) at a specified reference point, and thus represent the moving vehicle as a rectangle or polygon. This is highly accurate in situations where the moving vehicle moves in different situations or varying steering maneuver conditions. The computation of the position and orientation is highly accurate in situations where there is no global positioning data available, for example in the case of Dead Reckoning where GNSS data is not available. Moreover, as the method computes the position and orientation after the time period at which the moving vehicle moves above the predetermined speed, the method improves the accuracy of the localization for example compared to the yaw speed provided by the IMU sensor alone, which is sensitive to noise when there are high and low steering maneuvers (for example full lock actions) and low speeds.

Examples illustrating the derivation of equations eq. 3 to eq. 5 are now discussed with reference to FIG. 2.

The method may receive as input the vehicle motion data may also comprise the front wheel angle at the center of front axle $\varphi_F$ and the rear wheel angle at the center of rear axle $\varphi_R$ (e.g., stemming from the steering sensor), the wheelbase parameter (resulting from equation eq. 1) and the track width parameter (resulting from eq. 2).

The method may compute a wheel angle for each wheel (that is, a front right wheel angle $\varphi_{FR}$, front left wheel angle $\varphi_{FL}$, rear right wheel angle $\varphi_{RR}$ and rear left wheel angle $\varphi_{RL}$) according to the following equations:

$$\varphi_{FR} = \tan^{-1}\left[\frac{2\ell \tan(\varphi_F)}{2\ell + w (\tan(\varphi_F) - \tan(\varphi_R))}\right];$$

$$\varphi_{FL} = \tan^{-1}\left[\frac{2\ell \tan(\varphi_F)}{2\ell - w (\tan(\varphi_F) - \tan(\varphi_R))}\right];$$

$$\varphi_{RR} = \tan^{-1}\left[\frac{2\ell \tan(\varphi_R)}{2\ell + w (\tan(\varphi_F) - \tan(\varphi_R))}\right];$$

$$\varphi_{RL} = \tan^{-1}\left[\frac{2\ell \tan(\varphi_R)}{2\ell - w (\tan(\varphi_F) - \tan(\varphi_R))}\right].$$

The method may compute the displacements $\Delta S_{FL}$, $\Delta S_{RL}$, $\Delta S_{FR}$, and $\Delta S_{RR}$ and the speeds $v_{RR}$, $v_{RL}$, $v_{FR}$, $v_{FL}$ described above as follows:

$$\Delta S_i = \frac{\Delta P_i \times WC_i}{N_i};$$

$$v_i = \frac{RPM_i \times WC_i}{60};$$

Where $\Delta P_i$ is a respective change in pulses, $WC_i$ respective wheel circumferences and $RPM_i$ respective rotations per minute for each wheel i in the index $i$ ($i \in \{FR, Fl, RR, RL\}$).

The method may compute the orientation changes $\Delta\theta_{FR}$, $\Delta\theta_{FL}$, $\Delta\theta_{RR}$, $\Delta\theta_{RL}$ from the equations:

$$\Delta\theta_{FR} = \frac{\Delta S_{FR} \times \sin(\varphi_{FR} - \varphi_{RR})}{\ell \cos(\varphi_{RR})};$$

$$\Delta\theta_{FL} = \frac{\Delta S_{FL} \times \sin(\varphi_{FL} - \varphi_{RL})}{\ell \cos(\varphi_{RL})};$$

$$\Delta\theta_{RR} = \frac{\Delta S_{RR} \times \sin(\varphi_{FR} - \varphi_{RR})}{\ell \cos(\varphi_{FR})};$$

$$\Delta\theta_{RL} = \frac{\Delta S_{RL} \times \sin(\varphi_{FL} - \varphi_{RL})}{\ell \cos(\varphi_{FL})}.$$

The displacements $\Delta S_{FL}$, $\Delta S_{RL}$, $\Delta S_{FR}$, $\Delta S_{RR}$, wheel angles $\varphi_{FR}$, $\varphi_{FL}$, $\varphi_{RR}$, $\varphi_{RL}$, wheel orientation changes $\Delta\theta_{FR}$, $\Delta\theta_{FL}$, $\Delta\theta_{RR}$, $\Delta\theta_{RL}$ resulting from the equations readily yield equations eq. 3, eq. 4 and eq. 5.

The vehicle 2000 may be a four wheeled vehicle. When the vehicle is a four wheeled vehicle, the vehicle motion data comprises data stemming from four respective vehicle wheel sensors, e.g., each wheel sensor may be an odometer configured to measure data from a respective wheel. The vehicle motion data may comprise front wheel angles (e.g., left and right front wheel angles) at the center of front axle. This improves the accuracy of the localization the method takes into account the physical positioning of the four wheels of the vehicle for determining the change of position and orientation of the moving vehicle.

Alternatively, the vehicle 2000 may be a vehicle having attached a trailer. When the vehicle has attached a trailer, the vehicle motion data comprises data stemming from two rear vehicle wheel sensors of the vehicle and two wheel vehicle sensors of the trailer. For example, two wheel sensors may be configured to measure data from two respective rear wheels of the vehicle and two wheel sensors may be configured to measure data from two respective front wheels of the trailer. The vehicle motion data may comprise a hitch angle. The hitch angle is the difference between the orientation angle of the vehicle and the orientation angle of the trailer The front wheel angle may be represented with the hitch angle. Thus, the method allows the localization of the moving vehicle having an attached trailer with high accuracy by estimating the trailer wheelbase that is the distance between the trailer hitch joint and the trailer wheels axle, as the method takes into account the estimated trailer wheelbase for determining position of the trailer relative to the vehicle.

**Claims**

1. A computer-implemented method for determining the localization of a moving vehicle (2000), the method comprising:

   • at a time period in which the moving vehicle (2000) moves above a predetermined speed:

      ◦ obtaining vehicle motion data stemming from four vehicle wheel sensors, and/or a IMU sensor, and/or a steering sensor,
      ◦ computing a wheelbase parameter and a track width parameter of the moving vehicle from the vehicle motion data;

   • after the time period:

      ◦ using the computed wheelbase parameter and the track width parameter for computing the position and orientation of the moving vehicle.

2. The method of claim 1, wherein the vehicle motion data comprises a speed of the moving vehicle at a rear right side $v_{RR}$, a speed of the moving vehicle at a rear left side $v_{RL}$, a speed of the moving vehicle at a frontal right side $v_{FR}$, a speed of the moving vehicle at a frontal left side $v_{FL}$, a front wheel angle at the center of front axle $\varphi_F$ and a rear wheel angle at the center of rear axle $\varphi_R$ and a yaw rate $\dot{\theta}$, wherein

   • computing the wheelbase parameter based on the equation:

$$\ell = \left(\frac{(v_{RR}+v_{RL})\cos(\varphi_R)+(v_{FR}+v_{FL})\cos(\varphi_F)}{4}\right)\left(\frac{\tan(\varphi_F)-\tan(\varphi_R)}{\dot{\theta}}\right);$$

   and
   • computing the track width parameter based on the equation:

$$W = \frac{v_{RR}\cos(\varphi_R)+v_{FR}\cos(\varphi_F)-v_{RL}\cos(\varphi_R)-v_{FL}\cos(\varphi_F)}{2\dot{\theta}}.$$

3. The method of claim 2, wherein the vehicle motion data also comprises displacements $\Delta S_{FL}$, $\Delta S_{RL}$, $\Delta S_{FR}$, $\Delta S_{RR}$, wheel angles $\varphi_{FR}$, $\varphi_{FL}$, $\varphi_{RR}$, $\varphi_{RL}$, wheel orientation changes $\Delta\theta_{FR}$, $\Delta\theta_{FL}$, $\Delta\theta_{RR}$, $\Delta\theta_{RL}$, and computing the position of the moving vehicle (2000) comprises:

   • computing a net displacement $\Delta S$ based on the equation:

$$\Delta S = \frac{(\Delta S_{FL}\cos(\varphi_{FL})+\Delta S_{RL}\cos(\varphi_{RL}))\times TL+(\Delta S_{FR}\cos(\varphi_{FR})+\Delta S_{RR}\cos(\varphi_{RR}))\times TR}{4\times\cos(\varphi_R)},$$

   where:

$$TL = 1 + \frac{w}{2\,\ell}(\tan(\varphi_{FL}) - \tan(\varphi_{RL})),$$

and

$$TR = 1 - \frac{w}{2\,\ell}(\tan(\varphi_{FR}) - \tan(\varphi_{RR}));$$

• computing a net speed at the center of the rear axle v based on the equation:

$$v = \frac{(v_{FL}\cos(\varphi_{FL}) + v_{RL}\cos(\varphi_{RL})) \times TL + (v_{FR}\cos(\varphi_{FR}) + v_{RR}\cos(\varphi_{RR})) \times TR}{4 \times \cos(\varphi_R)};$$

• computing a net orientation change of the ego vehicle $\Delta\theta$ based on the equation:

$$\Delta\theta = \frac{\Delta\theta_{FL} + \Delta\theta_{RL} + \Delta\theta_{FR} + \Delta\theta_{RR}}{4},$$

and
• computing the position $[x_n, y_n]$ and orientation $\theta_n$ of the moving vehicle with respect to a known position $[x_0, y_0]$ and known orientation $\theta_0$ based on the equation:

$$\theta_n = \theta_0 + \frac{\Delta\theta}{2},$$

$$if \ (\varphi_F \approx \varphi_R),$$

$$x_n = x_0 + \Delta S \times \cos(\theta_n + \varphi_R)$$

$$y_n = y_0 + \Delta S \times \sin(\theta_n + \varphi_R)$$

$$else$$

$$x_n = x_0 + \Delta S \times \cos(\theta_n)$$

$$y_n = y_0 + \Delta S \times \sin(\theta_n)$$

$$end$$

$$\theta_n = \theta_n + \frac{\Delta\theta}{2}.$$

4.  The method of claim 3, wherein the vehicle (2000) is a four wheeled vehicle or a vehicle having attached a trailer, and wherein:

> • when the vehicle is a four wheeled vehicle, the vehicle motion data comprises data stemming from four respective vehicle wheel sensors, the vehicle motion data comprising front wheel angles at the center of front axle; and
> • when the vehicle has attached a trailer, the vehicle motion data comprises data stemming from two rear vehicle wheel sensors of the vehicle and two wheel vehicle sensors of the trailer, the vehicle motion data comprising a hitch angle being the difference between the orientation angle of the vehicle and the orientation angle of the trailer.

5.  The method of any one of claims 1 to 4, wherein the vehicle motion data stems from an odometer.

6.  The method of claim 5, wherein the odometer is a 4-wheel odometer.

7.  A computer program comprising instructions which, when executed by a computer system, cause the system to perform the method of any one of claims 1 to 6.

8. A computer-readable data storage medium having recorded thereon the computer program of claim 7.

9. A system comprising a processor coupled to a memory, the memory having recorded thereon the computer program of claim 7.

10. The system of claim 9, wherein the system is coupled with or further comprises a 4-wheel odometer, a steering system and/or an IMU.

11. A vehicle equipped with the system of claim 9 or 10.

FIG. 1

## FIG. 2

Europäisches
Patentamt

European
Patent Office

Office européen
des brevets

## EUROPEAN SEARCH REPORT

**Application Number**

EP 23 21 6573

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 005739 A1 (DAIMLER AG [DE]) 5 January 2017 (2017-01-05) | 1-4,7, 9-11 | INV. G01C21/16 |
| Y | * paragraphs [0016], [0022] - [0025]; claims 1,3; figure 1 * | 1,5,7,9, 11 | B60W40/10 |
| A | | 6 | |
| | ----- | | |
| Y | CN 113 195 328 A (BOSCH GMBH ROBERT) 30 July 2021 (2021-07-30) | 1,5,7,9, 11 | |
| A | * paragraph [X044] * | 6 | |
| | ----- | | |
| Y | US 2018/364365 A1 (KIRSCH FABIAN [DE]) 20 December 2018 (2018-12-20) | 1,5,7,9, 11 | |
| A | * paragraphs [0031], [0063] * | 6 | |
| | ----- | | |

**TECHNICAL FIELDS SEARCHED (IPC)**

B60W
G01C

The present search report has been drawn up for all claims

| Place of search | Date of completion of the search | Examiner |
|---|---|---|
| The Hague | 7 June 2024 | Chapple, Ian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 6573

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2024

| Patent document cited in search report | Publication date | Patent family member(s) | | Publication date |
|---|---|---|---|---|
| DE 102016005739 A1 | 05-01-2017 | NONE | | |
| CN 113195328 A | 30-07-2021 | CN 113195328 A | | 30-07-2021 |
| | | DE 102018222152 A1 | | 18-06-2020 |
| | | EP 3898367 A1 | | 27-10-2021 |
| | | US 2022024463 A1 | | 27-01-2022 |
| | | WO 2020126362 A1 | | 25-06-2020 |
| US 2018364365 A1 | 20-12-2018 | CN 109084754 A | | 25-12-2018 |
| | | DE 102017210050 B3 | | 06-12-2018 |
| | | US 2018364365 A1 | | 20-12-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018116284 A1